(19) Europäisches Patentamt

European Patent Office

Office européen des brevets

(11) **EP 0 920 811 B1**

(12) **FASCICULE DE BREVET EUROPEEN**

(45) Date de publication et mention
de la délivrance du brevet:
**17.03.2004  Bulletin 2004/12**

(51) Int Cl.⁷: **A23L 1/237**

(21) Numéro de dépôt: **98204080.0**

(22) Date de dépôt: **02.12.1998**

(54) **Sel comprenant un additif végétal et son procédé de fabrication**

Salz, das einen pflanzlichen Zusatz enthält, und Verfahren zur Herstellung desselben

Salt containing a vegetable additive and method for making the same

(84) Etats contractants désignés:
**AT BE CH DE DK ES FI FR GB GR IE IT LI LU NL
PT SE**

(30) Priorité:  **04.12.1997  FR 9715448**

(43) Date de publication de la demande:
**09.06.1999  Bulletin 1999/23**

(73) Titulaire: **SOLVAY (Société Anonyme)
1050 Bruxelles (BE)**

(72) Inventeurs:
 • **Franc, Maxime
   54210 Saint Nicolas de Port (FR)**
 • **Blondel, Jean-Marie
   54000 Nancy (FR)**

(74) Mandataire: **Jacques, Philippe et al
Solvay S.A.
Département de la Propriété Industrielle,
Rue de Ransbeek, 310
1120 Bruxelles (BE)**

(56) Documents cités:
   **EP-A- 0 130 822          BE-A- 890 060
   CA-A- 1 147 653          FR-A- 1 145 646
   FR-A- 1 259 510**

   • **PATENT ABSTRACTS OF JAPAN vol. 009, no.
     324 (C-320), 19 décembre 1985 & JP 60 156357 A
     (NITSUKEN SUTAMII KK), 16 août 1985**

## Description

L'invention est relative à du sel comprenant un additif végétal.

Elle concerne plus particulièrement du sel comprenant, en mélange, du chlorure de sodium et un additif végétal, en poudre.

Il est connu d'ajouter des additifs végétaux à du sel alimentaire, dans le but de lui conférer des propriétés dégustatives ou diététiques particulières. Ainsi, dans le brevet français FR-1 259 510, on additionne des algues à du sel alimentaire, dans le but de reconstituer du sel marin en lui apportant la teneur recherchée en iode.

On a observé, en pratique, que le produit obtenu en additionnant un additif végétal en poudre à du sel, se comporte mal au stockage et aux opérations de manutention. Au cours du stockage et sous l'effet des manutentions, on assiste notamment à une ségrégation de l'additif végétal dans le sel, ce qui est préjudiciable à l'utilisation de celui-ci dans diverses applications, notamment en cuisine. Ce comportement désavantageux est particulièrement perceptible dans le cas où l'additif végétal comprend une poudre d'algues. Dans ce cas particulier, la ségrégation des algues dans le sel se perçoit par une ségrégation de la teneur en iode dans le sel.

L'invention vise à remédier à cet inconvénient en fournissant un sel de qualité améliorée, qui peut supporter une longue période de stockage et des manutentions, sans que cela nuise à son homogénéité.

L'invention concerne dès lors du sel qui comprend une poudre de chlorure de sodium et une poudre d'au moins un additif végétal et qui se caractérise en ce que sa teneur en additif végétal présente un taux d'hétérogénéité inférieur à 25 %, ledit taux d'hétérogénéité étant la valeur absolue de l'équation

$$\left| \frac{1}{a} * [a - \frac{(b+c)}{2}] * 100 \right|$$

où a, b et c désignent les teneurs en additif végétal respectivement dans la zone médiane, la zone supérieure et la zone inférieure d'une éprouvette dudit sel soumise au test normalisé de résistance aux vibrations mécaniques, défini ci-après.

Dans le sel selon l'invention, la poudre de chlorure de sodium peut provenir de sel marin ou être du sel gemme. Il consiste avantageusement en du chlorure de sodium cristallisé par évaporation d'une solution aqueuse de chlorure de sodium obtenue par dissolution d'un gisement de sel gemme. La granulométrie du chlorure de sodium n'est pas critique et dépend de la destination du sel. A titre d'exemple, dans le cas où le sel est destiné à l'alimentation, on sélectionne avantageusement une granulométrie de 200 à 600 µm, définie par tamisage au moyen de tamis de la série TYLER.

L'additif végétal peut être toute substance végétale comestible, susceptible d'être mise en oeuvre à l'état d'une poudre. Nonobstant cette condition, l'additif végétal n'est pas critique. Les épices, notamment les aromates, constituent une classe d'exemples pour l'additif végétal du sel selon l'invention. On peut notamment citer, à titre d'exemples non limitatifs, le basilic, le thym, le laurier, les herbes de Provence, le safran, le curry. Le sel selon l'invention peut contenir un seul additif végétal ou un mélange d'additifs végétaux.

Dans le sel selon l'invention, l'additif végétal est mis en oeuvre à l'état d'une poudre. Celle-ci doit présenter une granulométrie inférieure à celle de la poudre de chlorure de sodium. On recommande que la granulométrie de la poudre d'additif végétal soit inférieure à 70 % (de préférence à 50 %) de la granulométrie de la poudre de chlorure de sodium. Dans le cas où la poudre de chlorure de sodium présente une granulométrie de 200 à 600 µm, on recommande que la granulométrie de la poudre d'additif végétal soit inférieure à 200 µm, de préférence au maximum égale à 100 µm. Des granulométries trop faibles n'étant pas souhaitables, on recommande que la granulométrie de la poudre d'additif végétal soit supérieure à 1µm, de préférence à 5 µm. Dans le cas où le sel est destiné à l'alimentation, on utilise avec avantage une poudre de chlorure de sodium de 200 à 600 µm et une poudre d'additif végétal de 50 à 100 µm. Dans ce qui précède, les valeurs de la granulométrie sont définies par tamisage au moyen de tamis de la série TYLER.

Le sel selon l'invention se particularise par son homogénéité. Celle-ci est définie par un taux d'hétérogénéité en additif végétal, qui est déterminé par un test normalisé de comportement aux vibrations mécaniques. Selon ce test normalisé, on utilise un récipient cylindrique de 90 mm de diamètre et 170 mm de haut (ce qui correspond à une capacité voisine d'un litre). On introduit dans le récipient 750 g du sel soumis au test, que l'on a préalablement homogénéisé, par exemple dans un mélangeur approprié. On pose ensuite le récipient contenant le sel homogène, verticalement sur une tamiseuse électromagnétique de laboratoire, de marque ANALYSETTE 3® (FRITSCH) et on fait fonctionner la tamiseuse durant 30 minutes, dans les conditions suivantes :

- amplitude des oscillations : réglage en position 6;
- position de marche : "inter" (3000 oscillations par minute et fonctionnement intermittent avec interruption de 0,5 s après un temps préréglé de 6 s).

A l'issue du test, on mesure la teneur en additif végétal dans trois zones du récipient : dans la zone médiane, dans la zone supérieure et dans la zone inférieure du récipient, la zone médiane correspondant approximativement à 80 % du volume du récipient et les zones supérieure et inférieure correspondant chacune à environ 10 % du volume du récipient. Le taux d'hétérogénéité du sel est, par définition, la valeur absolue de l'équation

$$\left|\frac{1}{a} * [a-\frac{(b+c)}{2}] * 100\right|$$

où a, b et c désignent les teneurs en additif végétal, mesurées respectivement dans la zone médiane (a), la zone inférieure (b) et la zone supérieure (c) du récipient.

Le sel selon l'invention présente un taux d'hétérogénéité tel que défini ci-dessus, inférieur à 25 %. Le taux d'hétérogénéité du sel selon l'invention n'excède généralement pas 15 %. Il est habituellement compris entre 1 et 10 %, plus généralement entre 2 et 6 %.

Dans une forme de réalisation avantageuse du sel selon l'invention, les teneurs précitées en additif végétal a, b et c présentent des différences relatives inférieures à 20 %, lesdites différences relatives étant exprimées par les valeurs absolues des trois relations $\left|\frac{a-b}{a}\right|$, $\left|\frac{a-c}{a}\right|$ et $\left|\frac{b-c}{a}\right|$.

Dans une variante préférée de cette forme de réalisation avantageuse de l'invention, les différences relatives précitées n'excèdent pas 15 % et sont généralement comprises entre 0,8 et 12 %.

Le sel selon l'invention est spécialement destiné à l'alimentation humaine ou animale.

Dans une forme de réalisation particulière du sel selon l'invention, l'additif végétal comprend au moins une algue iodée, généralement une algue marine. Dans cette forme de réalisation du sel selon l'invention, l'algue a pour fonction d'ioder le sel. Elle doit être comestible et contenir de l'iode. Dans le cas où le sel est destiné à l'alimentation humaine ou animale, l'algue doit contenir l'iode sous une forme assimilable par l'organisme. Nonobstant ces conditions, le choix de l'algue n'est pas critique. La quantité d'algue à mettre en oeuvre va dépendre de la teneur recherchée en iode dans le sel iodé, d'une part, et de l'algue sélectionnée, d'autre part. En générale, on règle la quantité d'algue pour conférer au sel iodé, une teneur en iode (exprimée en poids de matière sèche du sel) de 10 à 20 ppm, généralement de 12 à 15 ppm. On recommande de sélectionner une algue riche en iode, de manière à éviter de devoir mettre en oeuvre une trop grande quantité d'algues. Dans le cas où le sel est destiné à l'alimentation, on recommande habituellement une algue contenant plus de 2500 (de préférence au moins 5000) ppm d'iode (teneur exprimée en poids de matière sèche). Des algues contenant de 5000 à 8000 ppm d'iode conviennent bien.

En variante, l'additif végétal peut comprendre un mélange d'algues.

Le sel conforme à cette forme de réalisation de l'invention est spécialement destiné à l'alimentation humaine ou animale, où il apporte l'iode nécessaire à l'organisme. En variante, le sel selon cette forme de réalisation de l'invention trouve également une application en thalassothérapie.

L'invention concerne également un procédé de fabrication de sel conforme à l'invention, selon lequel on mélange une poudre d'un additif végétal à une poudre de chlorure de sodium, le procédé se caractérisant en ce qu'on met en oeuvre une poudre de chlorure de sodium humide, présentant une teneur en humidité supérieure à 20 g par kg de matière sèche de ladite poudre humide et, après avoir mélangé la poudre d'additif végétal à la poudre de chlorure de sodium, on soumet le mélange obtenu à un séchage pour amener sa teneur en humidité au-dessous de 20 g par kg de matière sèche dudit mélange.

Dans le procédé selon l'invention, la poudre de chlorure de sodium humide peut être obtenue au départ de sel marin ou de sel gemme. On préfère mettre en oeuvre une poudre de sel gemme. La poudre de chlorure de sodium présente une granulométrie compatible avec celle recherchée pour le sel. On peut par exemple mettre en oeuvre une poudre de chlorure de sodium de granulométrie tout venant 0 - 800 μm, obtenue par tamisage au travers d'un tamis de 800 μm d'ouverture de maille, de la série TYLER, ou une poudre présentant un étalement granulométrique de 200 à 600 μm (série TYLER). L'additif végétal est mis en oeuvre à l'état de poudre fine, dont la granulométrie est similaire ou inférieure à celle de la poudre de chlorure de sodium. L'additif végétal comprend avantageusement des algues, de préférence des algues iodées.

Conformément à l'invention, la poudre de chlorure de sodium humide présente une teneur en humidité supérieure à 20 g par kg de matière sèche de ladite poudre de chlorure de sodium humide. On recommande que la poudre de chlorure de sodium soit humide de manière sensiblement uniforme. En pratique, on préconise que la poudre de chlorure de sodium humide présente une teneur en humidité supérieure à 25 g (de préférence au moins égale à 30 g) par kg de poudre à l'état sec. Il convient d'éviter une teneur excessive en humidité, afin de limiter la dissolution du chlorure de sodium. En pratique, on recommande que la teneur en humidité de la poudre de chlorure de sodium humide n'excède pas 70 g (de préférence 60 g) par kg de poudre à l'état sec. Des teneurs en humidité de 25 à 50 g par kg de poudre à l'état sec sont spécialement recommandées.

Le taux d'humidité recherché peut être obtenu par tout moyen connu approprié, par exemple en projetant de l'eau à l'état divisé sur une poudre de chlorure de sodium. Dans une forme d'exécution particulière du procédé selon l'invention, on soumet une solution aqueuse de chlorure de sodium à une évaporation contrôlée de manière à cristalliser une poudre de chlorure de sodium imprégnée d'eau. La poudre ainsi obtenue est, si nécessaire, soumise à un essorage ou un séchage partiel pour obtenir le taux d'humidité recherché.

Le mélange de la poudre de chlorure de sodium humide à la poudre d'additif végétal peut être opéré dans tout mélangeur approprié, susceptible de réaliser un mélange homogène.

Après avoir mélangé la poudre de chlorure de sodium humide à la poudre de l'additif végétal, le mélange humide résultant est soumis à un séchage. Le séchage a pour fonction de réduire la teneur en humidité du mélange humide, dans le triple but de provoquer l'adhérence des particules d'additif végétal aux particules de chlorure de sodium, d'éviter la présence d'agglomérats dans le sel obtenu et de conférer à celui-ci des propriétés appropriées de coulabilité. La teneur en humidité du sel obtenu au moyen du procédé selon l'invention doit en outre être compatible avec l'application à laquelle on le destine. Outre l'application à laquelle on destine le sel, sa teneur maximum admissible en humidité va dépendre de divers paramètres, tels que sa granulométrie et le degré de coulabilité recherché. En général, dans le cas où le sel est destiné à l'alimentation humaine ou animale, on recommande que sa teneur en humidité n'excède pas 20 g (de préférence 10 g) par kg de matière sèche, les valeurs inférieures ou égales à 1 g par kg de matière sèche étant spécialement avantageuses.

Le séchage peut être exécuté dans tout type de sécheur approprié. On peut par exemple réaliser le séchage dans une étuve. On préfère toutefois, en variante, utiliser un sécheur du type à lit fluidisé, dans lequel le mélange de la poudre de chlorure de sodium humide et de la poudre d'additif végétal est traversé et fluidisé par un courant ascendant d'air sec.

L'intérêt de l'invention va apparaître au cours de la description suivante.

Dans les exemples dont la description suit, on a préparé des échantillons de sel iodé en mélangeant une poudre de chlorure de sodium et une poudre d'algues. A cet effet, on a mis en oeuvre une poudre de chlorure de sodium obtenue au départ de sel gemme et présentant une granulométrie de 200 à 600 μm et une poudre d'algue de granulométrie inférieure à 120 μm. Les poudres ont été calibrées par tamisage au moyen de tamis de la série TYLER.

Dans tous les essais on a utilisé une algue présentant une teneur en iode d'environ 6000 ppm et celle-ci a été utilisée en une quantité égale à 2 g d'algue par kg du sel iodé, de manière que celui-ci présente une teneur en iode d'environ 14 ppm.

Après homogénéisation du sel iodé obtenu en mélangeant la poudre de chlorure de sodium avec la poudre d'algue, on a immédiatement soumis celui-ci au test normalisé de comportement aux vibrations mécaniques, défini plus haut.

Exemple 1 (de référence)

Dans cet exemple, la poudre de chlorure de sodium a été mise en oeuvre à l'état sec et mélangée telle quelle à la poudre d'algue. A l'issue du test, on a relevé dans l'éprouvette de sel iodé les teneurs suivantes en iode :

-  dans la zone médiane : a = 10,3 ppm,
-  dans la zone supérieure : b = 11,7 ppm,
-  dans la zone inférieure : c = 39 ppm

On en déduit un taux d'hétérogénéité égal à :

$$\left| \frac{1}{10,3} * [10,3 - \frac{11,7+39}{2}] * 100 \right| = 146\%$$

Exemple 2 (conforme à l'invention)

On a répété l'essai de l'exemple 1, en remplaçant la poudre sèche de chlorure de sodium par une poudre humide de chlorure de sodium, présentant une teneur en humidité de 21 g d'eau par kg de poudre considérée à l'état sec.

A l'issue du test normalisé, on a relevé les teneurs suivantes en iode dans l'éprouvette de sel iodé :

-  dans la zone médiane : a = 12,7 ppm,
-  dans la zone supérieure : b = 12,6 ppm,
-  dans la zone inférieure : c = 13,5 ppm

On en déduit un taux d'hétérogénéité égale à :

$$\left| \frac{1}{12,7} * [12,7 - \frac{12,6 + 13,5}{2}] * 100 \right| = 2,75$$

Exemple 3 (conforme à l'invention)

L'essai de l'exemple 2 a été répété et le sel iodé a été séché en étuve, avant d'être soumis au test normalisé.

A l'issue du test normalisé, on a relevé les teneurs suivantes en iode dans l'éprouvette de sel iodé :

-  dans la zone médiane : a = 10,2 ppm,
-  dans la zone supérieure : b = 11,4 ppm,
-  dans la zone inférieure c = 11,2 ppm

On en déduit un taux d'hétérogénéité égale à :

$$\left| \frac{1}{10,2} * [10,2 - \frac{11,4 + 11,2}{2}] * 100 \right| = 5,39$$

Une comparaison du taux d'hétérogénéité du sel iodé obtenu au moyen du procédé de l'exemple 1 (antérieur à l'invention) avec ceux obtenus aux exemples 2 et 3 (conformes à l'invention) font apparaître le progrès apporté par l'invention.

**Revendications**

1.  Sel comprenant une poudre de chlorure de sodium et une poudre d'au moins un additif végétal, **caractérisé en ce que** sa teneur en l'additif végétal présente un taux d'hétérogénéité inférieur à 25 %, ledit taux d'hétérogénéité étant la valeur absolue de l'équation

$$\left| \frac{1}{a} * [a - \frac{(b+c)}{2}] * 100 \right|$$

où a, b et c désignent les teneurs en additif végétal respectivement dans la zone médiane, la zone supérieure et la zone inférieure d'une éprouvette dudit sel soumise à un test normalisé de comportement aux vibrations mécaniques, défini dans la description.

2. Sel selon la revendication 1, **caractérisé en ce que** les teneurs précitées a, b et c présentent des différences relatives inférieures à 20 %, lesdites différences relatives étant définies par les valeurs absolues des trois relations $|\frac{a-b}{a}|$, $|\frac{a-c}{a}|$ et $|\frac{b-c}{a}|$.

3. Sel selon la revendication 2, **caractérisé en ce que** le taux d'hétérogénéité est compris entre 2 et 6 % et les différences relatives sont comprises entre 0,8 et 12%.

4. Sel selon l'une quelconque des revendications 1 à 3, **caractérisé en ce que** la poudre de chlorure de sodium présente une granulométrie de 200 à 600 μm et la poudre d'additif végétal, une granulométrie au maximum égale à 100 μm, les granulométries étant définies par tamisage au moyen de tamis de la série TYLER.

5. Sel selon l'une quelconque des revendications 1 à 4, **caractérisé en ce que** l'additif végétal comprend au moins une algue.

6. Sel selon la revendication 5, **caractérisé en ce qu'**il présente une teneur moyenne en iode (exprimée en poids de matières sèche du sel) de 10 à 15 ppm.

7. Sel selon la revendication 5 ou 6, **caractérisé en ce que** l'algue présente une teneur en iode (exprimée en poids de matière sèche) de 3000 à 10000 ppm.

8. Procédé de fabrication d'un sel selon la revendication 1, selon lequel on mélange une poudre de l'additif végétal à une poudre de chlorure de sodium, **caractérisé en ce qu'**on met en oeuvre une poudre de chlorure de sodium humide, présentant une teneur en humidité supérieure à 20 g par kg de matière sèche de ladite poudre humide et, après avoir mélangé la poudre d'additif végétal à la poudre de chlorure de sodium, on soumet le mélange obtenu à un séchage pour amener sa teneur en humidité au-dessous de 20 g par kg de matière sèche dudit mélange.

9. Procédé selon la revendication 8, **caractérisé en ce que** la poudre de chlorure de sodium humide présente une teneur en humidité de 25 à 50 g par kg de matière sèche de la poudre humide.

10. Procédé selon la revendication 8 ou 9, **caractérisé**

**en ce qu'**à l'issue du séchage le mélange précité présente une teneur en humidité inférieure ou égale à 10 g par kg de matière sèche dudit mélange.

**Patentansprüche**

1. Salz, das ein Natriumchloridpulver und ein Pulver wenigstens eines pflanzlichen Zusatzes umfaßt, **dadurch gekennzeichnet, daß** sein Gehalt an pflanzlichem Zusatz einen Heterogenitätsgrad von unter 25% aufweist, wobei

$$\left| \frac{1}{a} * \left[ a - \frac{(b+c)}{2} \right] * 100 \right|$$

dieser Heterogenitätsgrad der Absolutwert der Gleichung ist, worin a, b und c die jeweiligen Gehalte an pflanzlichem Additiv in der mittleren Zone, der oberen Zone und der unteren Zone einer Eprouvette des Salzes sind, die einem normalisierten Verhaltenstest gegenüber mechanischen Schwingungen, wie in der Beschreibung definiert, unterzogen wird.

2. Salz nach Anspruch 1, **dadurch gekennzeichnet, daß** die vorstehend angeführten Gehalte a, b und c relative Unterschiede von unter 20% aufweisen, wobei die relativen Unterschiede durch die Absolutwerte der drei Beziehungen

$$\left| \frac{a-b}{a} \right|, \left| \frac{a-c}{a} \right| \text{ und } \left| \frac{b-c}{a} \right|$$

definiert sind.

3. Salz nach Anspruch 2, **dadurch gekennzeichnet, daß** der Heterogenitätsgrad zwischen 2 und 6% beträgt und die relativen Unterschiede zwischen 0,8 und 12% betragen.

4. Salz nach einem der Ansprüche 1 bis 3, **dadurch gekennzeichnet, daß** das Natriumchloridpulver eine Korngröße von 200 bis 600 μm aufweist und das Pulver des pflanzlichen Zusatzes eine Korngröße von höchstens 100 μm aufweist, wobei die Korngrößen durch Sieben mittels Sieben der TYLER-Reihe definiert sind.

5. Salz nach einem der Ansprüche 1 bis 4, **dadurch gekennzeichnet, daß** der pflanzliche Zusatz wenigstens eine Alge umfaßt.

6. Salz nach Anspruch 5, **dadurch gekennzeichnet, daß** es einen mittleren Iodgehalt (ausgedrückt als Trockengewicht des Salzes) von 10 bis 15 ppm aufweist.

7. Salz nach Anspruch 5 oder 6, **dadurch gekennzeichnet, daß** die Alge einen Iodgehalt (ausgedrückt als Trockengewicht) von 3.000 bis 10.000 ppm aufweist.

8. Verfahren zur Herstellung eines Salzes nach Anspruch 1, worin ein Pulver des pflanzlichen Zusatzes einem Natriumchloridpulver zugemischt wird, **dadurch gekennzeichnet, daß** ein feuchtes Natriumchloridpulver eingesetzt wird, das einen Feuchtigkeitsgehalt von über 20 g je kg Trockenmaterial des feuchten Pulvers aufweist, und daß nach dem Zumischen des Pulvers des pflanzlichen Zusatzes zu dem Natriumchloridpulver das erhaltene Gemisch einem Trocknen unterzogen wird, um seinen Feuchtigkeitsgehalt auf unter 20 g je kg Trockenmaterial des Gemisches zu bringen.

9. Verfahren nach Anspruch 8, **dadurch gekennzeichnet, daß** das feuchte Natriumchloridpulver einen Feuchtigkeitsgehalt von 25 bis 50 g je kg Trockenmaterial des feuchten Pulvers aufweist.

10. Verfahren nach Anspruch 8 oder 9, **dadurch gekennzeichnet, daß** am Ende des Trocknens das Gemisch einen Feuchtigkeitsgehalt von weniger als oder gleich 10 g je kg Trockenmaterial des Gemisches aufweist.

**Claims**

1. Salt comprising a sodium chloride powder and a powder of at least one plant additive, **characterized in that** its content of the plant additive shows a degree of heterogeneity of less than 25%, the said degree of heterogeneity being the absolute value of equation

$$\left| \frac{1}{a} * [a - \frac{(b+c)}{2}] * 100 \right|$$

in which a, b and c denote the contents of plant additive, respectively, in the median zone, the top zone and the bottom zone of a test tube of the said salt subjected to a standardized test of behaviour to mechanical vibrations, defined in the description.

2. Salt according to Claim 1, **characterized in that** the abovementioned contents a, b and c show relative differences of less than 20%, the said relative differences being defined by the absolute values of the three relationships $\left| \frac{a-b}{a} \right|$, $\left| \frac{a-c}{a} \right|$ and $\left| \frac{b-c}{a} \right|$.

3. Salt according to Claim 2, **characterized in that** the degree of heterogeneity is between 2% and 6% and the relative differences are between 0.8% and 12%.

4. Salt according to any one of Claims 1 to 3, **characterized in that** the sodium chloride powder has a particle size of from 200 to 600 μm and the powder of the plant additive has a maximum particle size equal to 100 μm, the particle sizes being defined by screening using Tyler screens.

5. Salt according to any one of Claims 1 to. 4, **characterized in that** the plant additive comprises at least one alga.

6. Salt according to Claim 5, **characterized in that** it has a mean iodine content (expressed as weight of salt solids) of 10 to 15 ppm.

7. Salt according to Claim 5 or 6, **characterized in that** the alga has an iodine content (expressed as weight of solids) of 3 000 to 10 000 ppm.

8. Process for manufacturing a salt according to Claim 1, according to which a powder of the plant additive is mixed with a sodium chloride powder, **characterized in that** a wet sodium chloride powder is used, having a moisture content of greater than 20 g per kg of solids of the said wet powder, and, after the powder of the plant additive has been mixed with the sodium chloride powder, the mixture obtained is subjected to a drying operation to bring its moisture content below 20 g per kg of solids of the said mixture.

9. Process according to Claim 8, **characterized in that** the wet sodium chloride powder has a moisture content of from 25 to 50 g per kg of solids of the wet powder.

10. Process according to Claim 8 or 9, **characterized in that**, after the drying operation, the abovementioned mixture has a moisture content of less than or equal to 10 g per kg of solids of the said mixture.